# EUROPEAN PATENT SPECIFICATION

(11) **EP 1 254 689 B1**
(45) Date of publication and mention of the grant of the patent: **01.09.2010**
(21) Application number: 02253084.4
(22) Date of filing: 01.05.2002
(51) Int. Cl.: B01D 29/01, B01D 46/52, F02M 35/024

(54) **Pleated filter media with embossed spacers and cross flow**
Gefaltetes Filtermedium mit eingeprägten Abstandshaltern und für Queranströmung
Matière filtrante plissée comportant des pièces d'écartement estampées, pour une circulation du flux transversale

(30) Priority: 01.05.2001 US 287420 P
(43) Date of publication of application: 06.11.2002
(73) Proprietor: Wix Filtration Corp LLC, Gastonia NC 28054 (US)
(72) Inventor: Tate, Jason LaMarr, Bessemer City, NC (US); Covington, Edward Allen, Gastonia, NC (US); Lanier, JR, Roland Vann, Belmont, NC (US)
(74) Representative: Style, Kelda Camilla Karen

(56) References cited:
- EP-A- 1 059 108
- DE-A- 2 034 669
- DE-A- 3 043 232
- DE-A- 3 300 293
- DE-A- 4 217 195
- US-A- 5 066 400

## Description

The present invention relates to a filter element having a filter media with embossed spacers. More particularly, the present invention is directed to a filter element having a filter media with embossed spacers which allow for cross flow of dirty air into the filter media.

Document DE-A-30 43 232 discloses a filter media and a filter element formed therefrom according to the preamble of the independent claims.

Filter elements which use filter media having spacer arrangements between panels of the media for filtering particulate bearing fluid streams are known in the art. However, the spacers tend to be inserted elements which increases the cost of filter media and can compromise the reliability of the filter media. This is because inserted spacers can become dislodged and damage the filter media if on the upstream or dirty side of the filter media. If on the clean side of the spacers can become dislarged and possibly damage the machinery served by the filter media.

With respect to air filters for internal combustion engines, there is continuing need to increase dirt holding capacity while reducing restriction. Preferably, this is accomplished as inexpensively as possible. With respect to filters for diesel trucks, increased dirt holding capacity with acceptable restriction levels is currently only obtainable with cylindrical filters used for medium and heavy duty applications. In order to conserve space in engine compartments panel air filters are now being employed, but panel air filters have encountered the aforementioned problems of reduced dirt holding capacity and relatively high restriction. Accordingly, there is a need for improvement in panel air filters.

According to a first aspect of the present invention there is provided a panel filter element, comprising a pleated filter media having peaks and valleys and having a clean and dirty side, the pleated filter media having arrays of elongate embossments arranged in columns extending between the peaks and valleys projecting from both the clean and dirty sides, the pleated filter media further being arranged with sets of pleats having edges which are closed to form the clean side of the pleated filter media into pockets with openings adjacent to the valleys, and a peripheral seal around the filter media forming a barrier between the clean and dirty sides, whereby the pleated filter media is arranged such that dirty fluid is permitted to enter the pleated filter media in a direction transverse to the peaks of the pleated filter media, and laterally between the sets of closed pleats, and to emerge in the pockets as clean fluid for passage out of the openings adjacent the valleys, wherein the embossments in some columns on the dirty side are spaced to form gaps that allow dirty fluid to flow between the embossments.

According to a second aspect of the present invention there is provided a filter media for a panel filter element, the filter media being as described in appended claim 10.

According to a third aspect of the present invention there is provided a method of making a pleated filter media for a panel filter element, the method being as described in appended claim 15.

Various other features and attendant advantages of the present invention will be more fully appreciated as the same becomes better understood when considered in conjunction with the accompanying drawings, in which like reference characters designate the same or similar parts throughout the several views, and wherein:
Fig. 1 is a bottom perspective view of the filter element configured in accordance with the present invention;
Fig. 2 is a bottom planar view of the filter of Fig. 1;
Fig. 3 is a top perspective view of the filter element of Fig. 1;
Fig. 4 is a side view of the filter of Figs. 1-3;
Fig. 5 is a bottom perspective view of the filter of Figs. 1-4 showing a portion of the filter media cut away;
Fig. 6 is a first end view of the filter element showing a first panel;
Fig. 7 is a second end view of the filter element showing a second panel;
Fig. 8 is a planar view of the clean side of the filter media before being pleated;
Fig. 9 is a planar view of the dirty side of the filter media before being pleated, and
Fig. 10 is a perspective view of an air cleaner for engine combustion air which utilizes the filter element of Figs. 1-9.

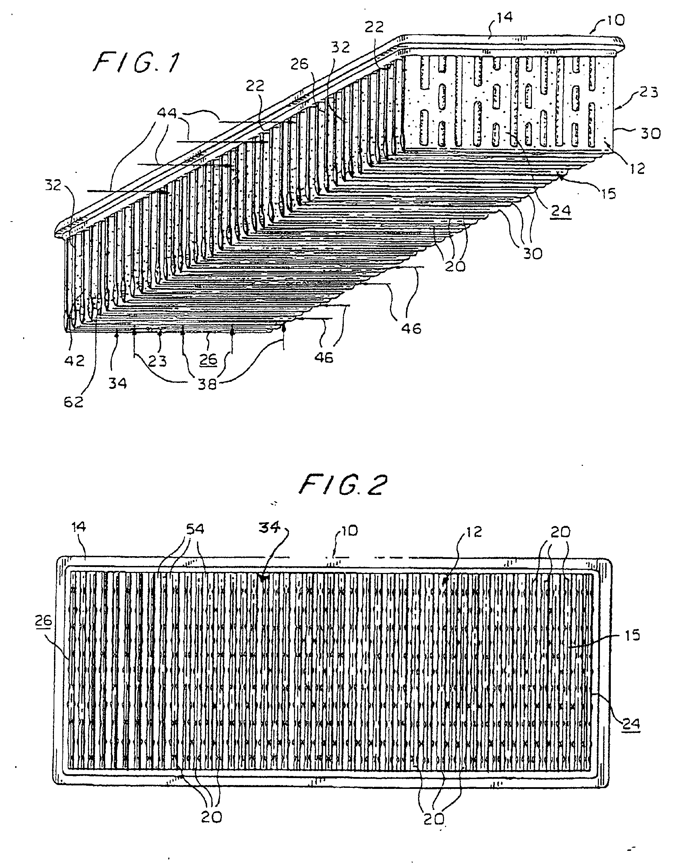

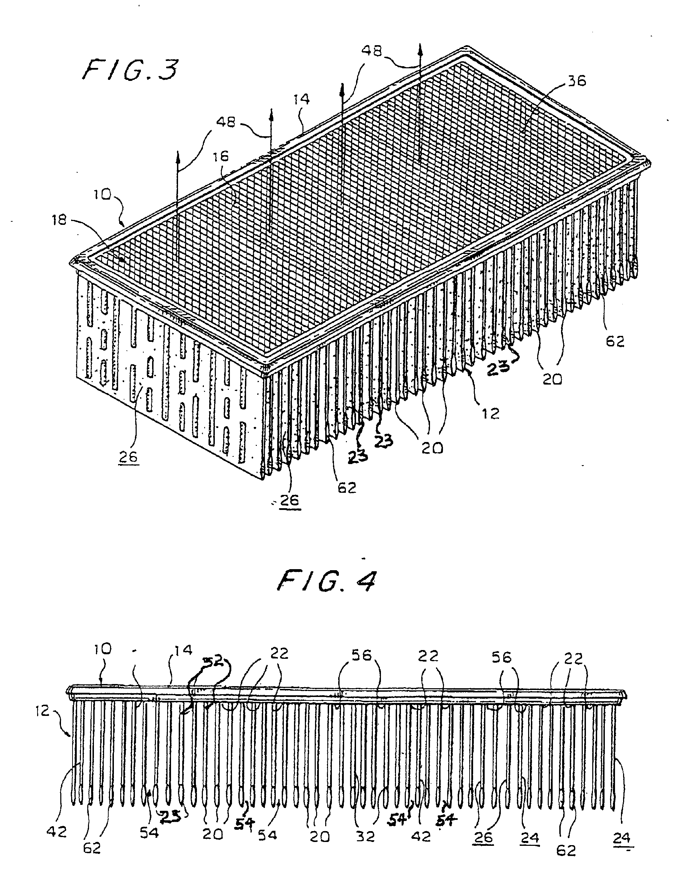

Referring now to Figs. 1, 2 and 3 there is shown a filter element 10 configured in accordance with the principles of the present invention. The filter element 10 includes a pleated filter media 12 and a peripheral seal 14. The filter media 12 is made from cellulose and the peripheral seal 14 is made of a rubber or rubber-like polymer material, for example polyurethane. Figs. 1 and 2 illustrate the dirty side 15 of the filter element 10. As is seen in Fig. 3, the top of the filter element 10 is covered by an expanded metal screen 16 which covers the clean side 18 of the filter element 10.

Pleated filter media 12 has peaks 20 and valleys 22 defined by pleat forming sets 23 of first and second panels 24 and 26 that are closed adjacent first and second edges 30 and 32. Peaks 20 occur in a plane which defines a dirty-side face 34 of the filter media 12, while the valleys 22 occur in a plane which defines a clean-side face 36 of the filter media. In accordance with the principles of the present invention, dirty air enters the filter media in directions transverse to the dirty-side face 34 as indicated by arrows 38 and laterally to the dirty-side face through side filter media faces 40 and 42 of the first and second panels 24 and 26 in the directions of arrows 44 and 46, respectively. As is seen in Fig. 3, clean air exits the filter element 10 through the clean side face 36 in the direction of arrows 48. The peaks 20 and valleys 22 are determined by the direction 38 of dirty air flow through the filter media 12 so that the peaks are at the bottom and the valleys are above the peaks.

Referring now to Figs. 4-7 showing side and end views of the filter element 10, it is seen that the pleat sets 23 formed by the first and second panels 24 and 26 are adhered only at their edges 30 and 32 (Fig. 1). Consequently, gaps 54 are maintained between adjacent pleat forming sets 23. Accordingly, dirty air can pass laterally between the pleat sets 23 in the direction of arrows 44 and 46 (see Fig. 1). Spacing is maintained between the pleat sets 23 adjacent the edges 30 and 32 by having substantially flat or obtuse valley floors 56 to keep the edges 30 and 32 of the sets 23 spaced from one another, and by having arrays 60 of spaced embossments and a continuous embossment 61 projecting from the dirty sides 40 and 42 of the first and second panels 24 and 26. The embossments 60 have spaces 64 therebetween to allow dirty air to continually pass laterally between the sides 40 and 42 of the pleated filter media 12. As will be explained hereinafter, the embossments 60 cooperate not only to keep the pleated sets 23 in spaced relation, but also stiffen the pleats and distribute air over the pleats in an even fashion so as to increase the capacity of the filter media 12 while reducing restriction.

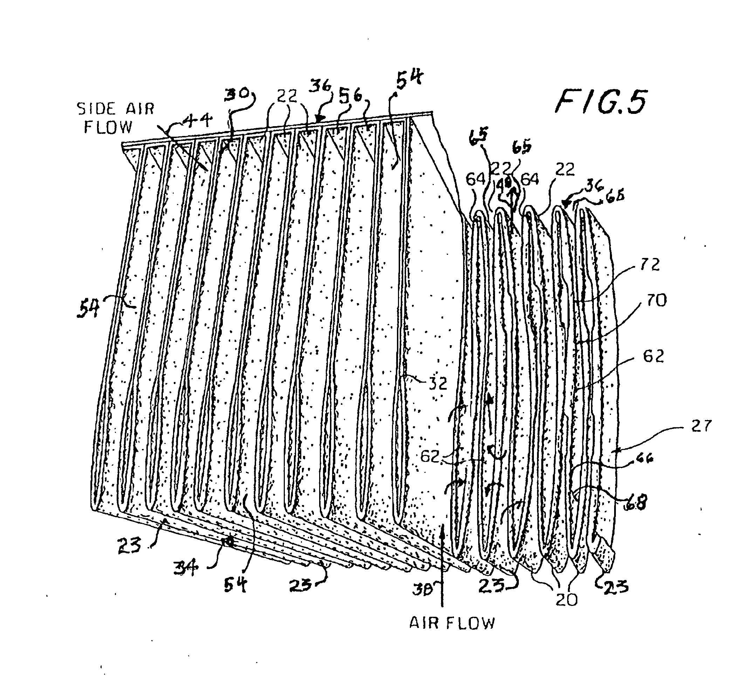

Referring now mainly to Fig. 5, where the filter media 12 has been severed through the pleated sets 23 to reveal pockets 62, which open upwardly through openings 65 which coincide with the clean side face 36 of the filter element 10. As with the dirty sides 40 and 42 of the panels 24 and 26, clean sides 66 and 68 of the panels are kept separated by arrays of spaced embossments 70 projecting from the first and second panels 24 and 26 into the pockets 62. As with the dirty sides of the panels the embossments 70 abut but have gaps 72 therebetween so that clean air in a direction 48 flows from the peaks 20 toward the openings 65, and is channeled by the embossments 70. If necessary the clean air can pass laterally through the gaps 72 between embossments 70 so as to even out clean air flow and make it more laminar, which is desirable if the clean air is combustion air for an internal combustion engine.

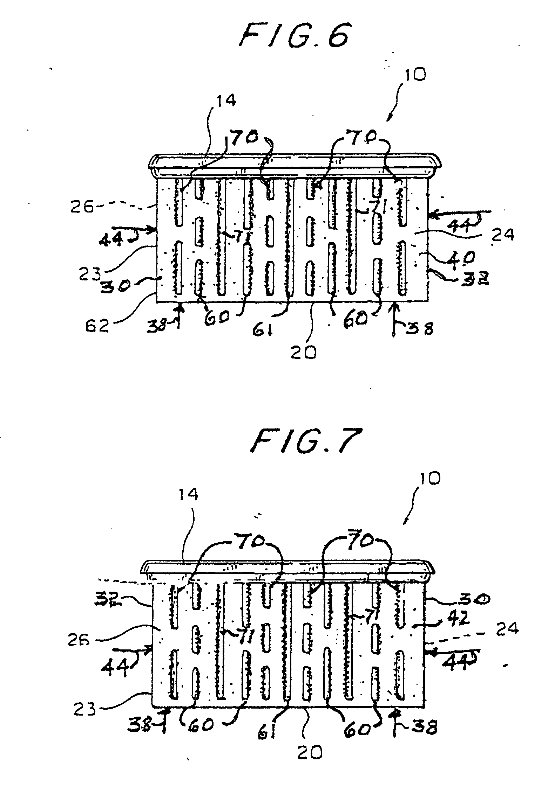

Referring now mainly to Figs. 6 and 7 as well as Fig. 5 wherein end views of the filter element 10 reveal embossment structure, it is seen that the first and second panels 24 and 26 have the arrays of spaced embossments 60 and 70 that respectively keep the pleat sets 23 spaced from one another and keep the pleat sets 23 open to define the interior pockets 62 (Fig. 5). The first panel 24 and the second panel 26 are substantially identical so that when the first and second panels are folded at the peaks 20, the arrays of spaced embossments 70 abut within the pocket 62 (see Fig. 5) with gaps 72 therebetween, while the elongated continuous embossments 71 abut, and with the closed edges 30 and 32, form three substantially closed first channels within the pockets 62.

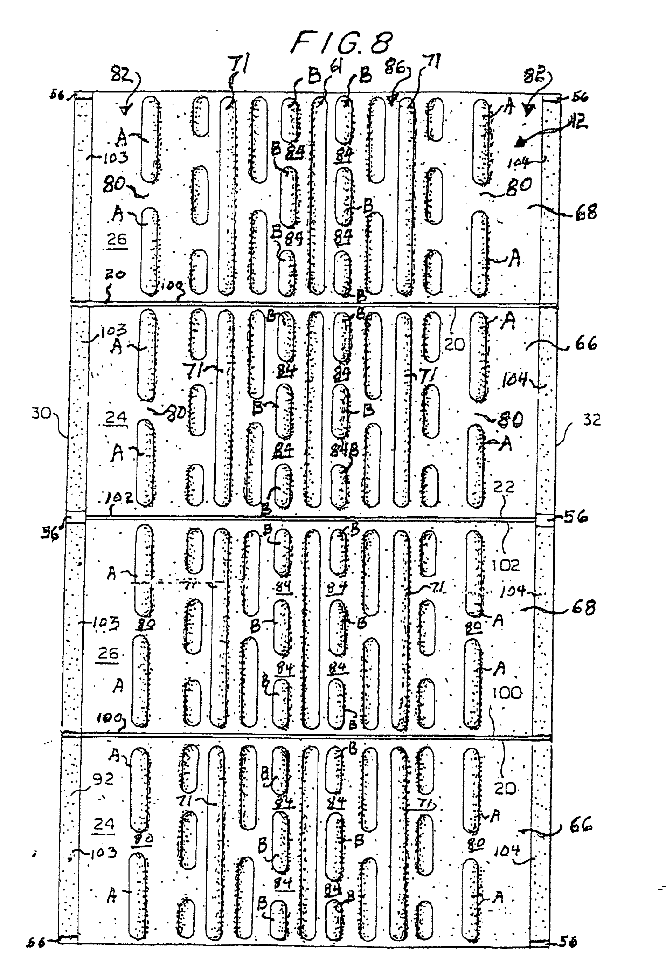

Referring now to Fig. 8 where the clean sides 66 and 68 of the filter media 12 are shown prior to folding the media web 12 at peaks 20 and valleys 22, it is seen that upon folding the media web, pairs of spaced embossments A abut within the pockets 62 of Fig. 5. Gaps 80 occur between the spaced embossments A. The two elongated continuous embossments 71 with the opposite edges 30 and 32 of the filter media 12 form a pair of closed channels 82 adjacent opposite edges. The spaced columns of three embossments B, with spaces 84 therebetween are in a central channel 86 in pockets 62 (Fig. 5) between a pair of the elongated continuous embossments 71. Upon folding the filter media 12 so that the panels 24 and 26 have clean-side surfaces 66 and 68 in abutment and then adhering the edges 30 and 32 to one another with beads of adhesive, the interior pockets 62 of Fig. 5 are created.

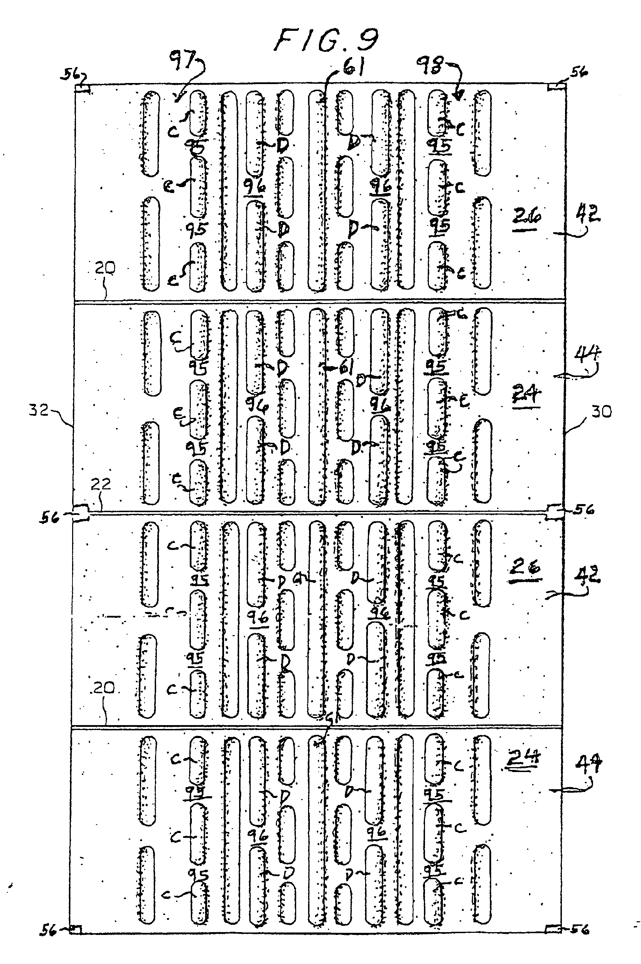

Referring now to Fig. 9, a second array of embossments 61, including three spaced embossments C separated by spaces 95; pairs of embossments D separated by spaces 96, and the continuous central embossment 61, project from the dirty sides 40 and 42 of the first and second panels 24 and 26. These embossments abut one another to help keep the pleated sets 23 separated to provide the gaps 54 therebetween (see Figs. 4 and 5). When folded, the continuous center embossment 61 channels air through the dirty-side face 34 and between the sides edges 30 and 32 in two separate channels 97 and 98 on the dirty side of the filter media 12.

As is seen in Figs. 8 and 9 where the filter media 12 is shown flat prior to folding at creases 100 and 102 to form the peaks 20 and valleys 22, it is seen that first and second panels 24 and 26 are identically embossed so that upon folding, the appropriate embossments face one another to provide interior and exterior spacing. As is seen in Fig. 8, at least the first panels 24 have beads of adhesive 103 and 104 proximate edges 30 and 32, respectively. The panels 24 and 26 are folded along the creases 105 and 106 to form the peaks 20 and valleys 22 of the pleated filter media with the adhesive beads 103 and 104 adhering the edges 30 and 32 of the panels 24 and 26 together so as to form the pockets 62 shown in Fig. 5. Each valley 22 has the flattened area 56 at each end in order to help keep the edge portions 30 and 32 of adjacent panels 24 and 26 separate. In that the seal 14 is molded around the filter media 10, the material of the seal engages and wedges adjacent the flattened panel portion 56 to help stiffen the base portion of the filter media formed by the valleys 22.

The aforedescribed filter element has use as an air filter for internal combustion engines. Since the height of the pleats is approximately 76 mm (3 inches), the various embossments described provide stiffness as well as spacing.

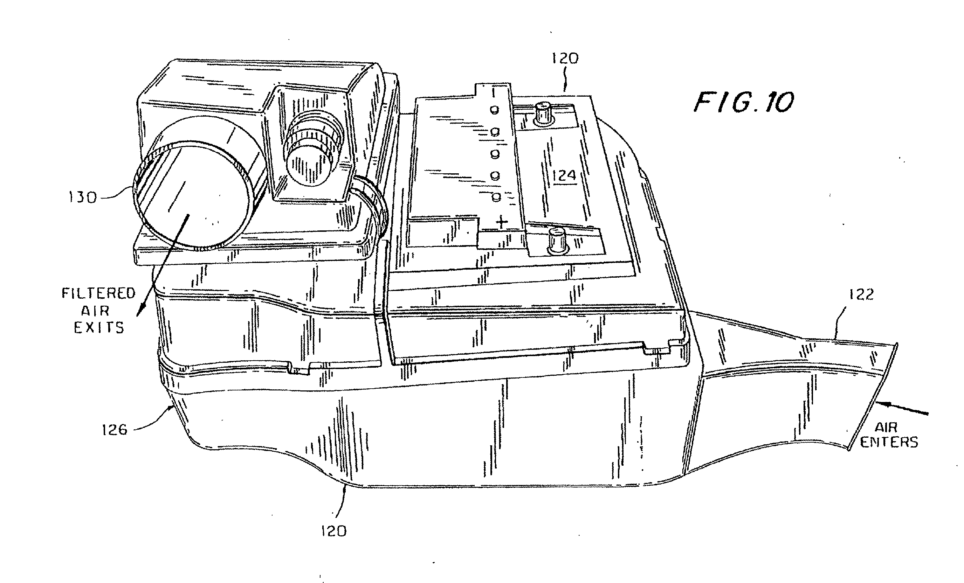

Fig. 10 illustrates an air cleaner 120 for an internal combustion engine (not shown) in which a filter element 10 embodying the principles of the present invention is used. Dirty air enters the air cleaner 120 through an inlet 122, passes adjacent to and around a storage battery 124 and into a filter housing 126. The dirty air then rises through the dirty-side face 34 of the filter media 12 (Fig. 1) within the filter housing as well as passing laterally through the sides of the filter media. Clean air passes through the clean-side face 36 (Fig. 1) of the filter media 12 and out of the outlet 130 for combustion by the associated engine.

While the filter element 10 is shown being used to filter air, the structure of the filter media 12 and filter element is usable to filter other gases as well as fluids in general including liquids.

## Claims

1. A panel filter element (10), comprising:
a pleated filter media (12) having peaks (20) and valleys (22) and having a clean and dirty side (18, 15), the pleated filter media (12) having arrays of elongate embossments (60, 70) arranged in columns (A, B, C, D) extending between the peaks (20) and valleys (22) projecting from both the clean and dirty sides (18, 15), the pleated filter media (12) further being arranged with sets (23) of pleats having edges (30, 32) which are closed to form the clean side (18) of the pleated filter media into pockets (62) with openings (65) adjacent to the valleys (22), and
a peripheral seal (14) around the filter media (12) forming a barrier between the clean and dirty sides (18, 15),
whereby the pleated filter media (12) is arranged such that dirty fluid is permitted to enter the pleated filter media (12) in a direction transverse to the peaks (20) of the pleated filter media (12), and laterally between the sets (23) of closed pleats, and to emerge in the pockets (62) as clean fluid for passage out of the openings (65) adjacent the valleys (22),
**characterised in that** the embossments (60) in some columns (C, D) on the dirty side (15) are spaced to form gaps (95, 96) that allow dirty fluid to flow between the embossments (60).

2. The panel filter element (10) of claim 1, wherein the embossments (70) in some columns (A,B) on the clean side (18) are spaced to form gaps (72, 80, 84) that allow clean fluid to flow between the embossments (70).

3. The panel filter element (10) of claim 1 or claim 2, wherein the embossments (61) in some columns on the dirty side (15) are continuous to form channels arranged such that said fluid is directed to flow in a direction transverse to the peaks (20) and valleys (22).

4. The panel filter element (10) of any one of the preceding claims, wherein the embossments (71) in some columns on the clean side (18) are continuous to form channels within the pockets (62).

5. The panel filter element (10) of any one of the preceding claims, wherein pairs of embossments (70) on the clean side (18) abut each other within the pockets (62).

6. The panel filter element (10) of any one of the preceding claims, wherein the valleys (22) comprise flat valley floors (56) to keep the edges (30, 32) of the sets (23) spaced from one another.

7. The panel filter element (10) of claim 6, wherein the seal (14) is moulded around the pleated filter media (12) and engages the flat valley floors (56) to stiffen a base portion of the pleated filter media (12) formed by the valleys (22).

8. The panel filter element (10) of any one of the preceding claims, wherein the valleys (22) lie in a plane which defines a clean side face (36) of the pleated filter media (12), and the filter element (10) includes a screen (16) over the clean side face (36).

9. The panel filter element (10) of any one of the preceding claims, wherein the pleated filter media (12) is made from cellulose.

10. A filter media for a panel filter element (10), the filter media comprising:
a filter media web (12) having opposing first and second sides and first and second longitudinally extending edges (30, 32), the web (12) being divided by transverse fold lines (100, 102) into a plurality of first and second panels (24, 26) and having arrays of elongate embossments (60, 70) projecting from both the first and second sides arranged in columns (A, B, C, D) extending between the fold lines (100, 102); and
adhesive (103,104) proximate the first and second longitudinally extending edges (30, 32) on the first side of the web (12);
wherein the web (12) is foldable along the fold lines (100, 102) such that said first and second panels (24, 26) face one another on both the first and second sides to form a pleated filter media with peaks (20) and valleys (22), the first side forming a clean side (18) for the panel filter element (10) and the second side forming a dirty side (15) for the panel filter element (10), with the arrays of elongate embossments (60, 70) arranged in columns (A, B, C, D) extending between the peaks (20) and valleys (22) and projecting from both the clean and dirty sides (18,15) ; and
wherein the adhesive (103, 104) is arranged to adhere the first and second panels (24, 26) to one another at the first and second longitudinally extending edges (30, 32) on the first side when the web (12) is folded to form pockets (62) with openings (65) adjacent to the valleys (22) on the clean side (18);
**characterised in that** the embossments (60) in some columns (C, D) on the second side are spaced to form gaps (95, 96) that allow dirty fluid to flow between the embossments (60).

11. The filter media of claim 10, wherein the embossments (70) in some columns (A,B) on the first side are spaced to form gaps (80, 84) that allow clean fluid to flow between the embossments (70).

12. The filter media of claim 10 or claim 11, wherein the embossments (61) in some columns on the second side are continuous to form channels arranged such that said fluid is directed to flow in a direction transverse to the fold lines (100, 102).

13. The filter media of any one of claims 10 to 12, wherein the embossments (71) in some columns on the first side are continuous to form channels arranged such that said fluid is directed to flow in a direction transverse to the fold lines (100, 102).

14. The filter media of any one of claims 10 to 13, wherein the filter media web (12) is made from cellulose.

15. A method of making a pleated filter media for a panel filter element (10), the method comprising:
folding a filter media web (12) along transverse fold lines (100, 102),
the filter media web (12) having opposing first and second sides and first and second longitudinally extending edges (30, 32), the web (12) being divided by the transverse fold lines (100, 102) into a plurality of first and second panels (24, 26) and having arrays of elongate embossments (60, 70) projecting from both the first and second sides arranged in columns (A, B, C, D) extending between the fold lines (100, 102), the folding being such that the first and second panels (24, 26) are made to face one another on both the first and second sides to form a pleated filter media with peaks (20) and valleys (22), the first side forming a clean side (18) for the panel filter element (10) and the second side forming a dirty side (15) for the panel filter element (10), with the arrays of elongate embossments (60, 70) arranged in columns (A, B, C, D) extending between the peaks (20) and valleys (22) and projecting from both the clean and dirty sides (18, 15); and
adhering the first and second panels (24, 26) to one another at the first and second longitudinally extending edges (30, 32) on the first side to form pockets (62) with openings (65) adjacent to the valleys (22) on the clean side (18);
wherein adhesion is effected by adhesive (103, 104) proximate the first and second longitudinally extending edges (30, 32) on the first side of the web (12);
**characterised in that** the embossments (60) in some columns (C, D) on the dirty side (15) are spaced to form gaps (95, 96) that allow dirty fluid to flow between the embossments (60).

## Patentansprüche

1. Plattenfilterelement (10), das aufweist:
ein gefaltetes Filtermedium (12), das Erhöhungen (20) und Vertiefungen (22) aufweist und das eine saubere und eine unsaubere Seite (18, 15) aufweist, wobei das gefaltete Filtermedium (12) Bereiche aus langgestreckten Einprägungen (60, 70) aufweist, die in Spalten (A, B, C, D) angeordnet sind, die sich zwischen den Erhöhungen (20) und Vertiefungen (22) erstrecken, die sowohl von der sauberen als auch der unsauberen Seite (18, 15) hervorstehen, wobei das gefaltete Filtermedium (12) weiterhin mit Gruppen (23) von Falten eingerichtet ist, die Kanten (30, 32) aufweisen, die geschlossen sind, um die saubere Seite (18) des gefalteten Filtermedium in Fächer (62) mit zu den Vertiefungen (22) angrenzenden Öffnungen (65) auszuformen, und
eine Umfangsdichtung (14) um das Filtermedium (12), die eine Sperre zwischen der sauberen und der unsauberen Seiten (18, 15) ausformt,
wodurch das gefaltete Filtermedium (12) so eingerichtet ist, dass es verschmutzter Flüssigkeit ermöglicht wird, in einer Richtung quer zu den Erhöhungen (20) des gefaltete Filtermediums (12) und seitlich zwischen den Gruppen (23) von geschlossenen Falten in das gefaltete Filtermedium (12) einzutreten, und zum Durchtritt aus den zu den Vertiefungen (22) angrenzenden Öffnungen (65) als saubere Flüssigkeit in die Fächer (62) auszutreten,
**dadurch gekennzeichnet, dass** die Einprägungen (60) in einigen Spalten (C, D) auf der unsauberen Seite (15) voneinander beabstandet sind, um Lücken (95, 96) auszuformen, die es verschmutzter Flüssigkeit ermöglichen, zwischen den Einprägungen (60) zu fließen.

2. Plattenfilterelement (10) nach Anspruch 1, wobei die Einprägungen (70) in einigen Spalten (A, B) auf der sauberen Seite (18) voneinander beabstandet sind, um Lücken (72, 80, 84) auszuformen, die es sauberer Flüssigkeit ermöglichen, zwischen den Einprägungen (70) zu fließen.

3. Plattenfilterelement (10) nach Anspruch 1 oder Anspruch 2, wobei die Einprägungen (61) in einigen Spalten auf der unsauberen Seite (15) durchgängig sind, um Kanäle auszuformen, die so angeordnet sind, dass die Flüssigkeit gelenkt wird, um in einer Richtung quer zu den Erhöhungen (20) und Vertiefungen (22) zu fließen,

4. Plattenfilterelement (10) nach einem der vorherigen Ansprüche, wobei die Einprägungen (71) in einigen Spalten auf der sauberen Seite (18) durchgängig sind, um innerhalb der Fächer (62) Kanäle auszuformen.

5. Plattertfilterelement (10) nach einem der vorherigen Ansprüche, wobei Paare von Einprägungen (70) auf der sauberen Seite (18) innerhalb der Fächer (62) aneinander angrenzen.

6. Plattenfilterelement (10) nach einem der vorherigen Anspruch, wobei die Vertiefungen (22) abgeflachte Vertiefungsböden (56) aufweisen, um die Kanten (30, 32) der Gruppen (23) voneinander beabstandet zu halten.

7. Plattenfiltereletnent (10) nach Anspruch 6, wobei die Dichtung (14) um das gefaltete Filtermedium (12) herum ausgeformt ist und in die flachen Vertiefungsböden (56) eingreift, um ein Unterteil des gefalteten Filtermediums (12) zu versteifen, das durch die Vertiefungen (22) ausgeformt wird,

8. Plattenfilterelement (10) nach einem der vorherigen Ansprüche, wobei die Vertiefungen (22) in einer Ebene liegen, die eine saubere Seitenfläche (36) des gefalteten Filtermediums (12) definiert, und das Filterelement (10) ein Sieb (16) über die saubere Seitenfläche (36) einschließt.

9. Plattenfilterelement (10) nach einem der vorherigen Anspruch, wobei das gefaltete Filtermedium (12) aus Zellulose hergestellt ist.

10. Filtermedium für ein Plattenfiltereletneni (10), wobei das Filtermedium aufweist:
ein Filtermediumgewebe (12), das einander gegenüber liegende erste und zweite Seiten und erste und zweite sich der Länge nach erstreckende Kanten (30, 32) aufweist, wobei das Gewebe (12) durch quer verlaufende Faltungslinien (100, 102) in eine Vielzahl von ersten und zweiten Platten (24, 26) unterteilt ist und Bereiche von langgestreckten Einprägungen (60, 70) aufweist, die sowohl von der ersten als auch der zweiten Seite hervorstehen und in Spalten (A, B, C, D) angeordnet sind, die sich zwischen den Faltungslinien (100, 102) erstrecken; und
ein Haftmittel (103, 104) benachbart zu den ersten und zweiten sich der Länge nach erstreckenden Kanten (30, 32) auf der ersten Seite des Gewebes (12);
wobei das Gewebe (12) entlang der Faltungslinien (100, 102) so faltbar ist, dass die ersten und zweiten Platten (24, 26) einander sowohl auf der ersten als auch der zweiten Seite gegenüber liegen, um ein gefaltete Filtermedium mit Erhöhungen (20) und Vertiefungen (22) auszuformen, wobei die erste Seite eine saubere Seite (18) für das Plattenfilterelement (10) ausformt und die zweite Seite eine unsaubere Seite (5) für das Plattenfilterelement (10) ausformt, wobei die Bereiche der langgestreckten Einprägungen (60, 70) in Spalten (A, B, C, D) angeordnet sind, die sich zwischen den Erhöhungen (20) und Vertiefungen (22) erstrecken und sowohl von der sauberen als auch der unsauberen Seite (18,15) hervorragen; und
wobei das Haftmittel (103, 104) eingerichtet ist, die ersten und zweiten Platten (24, 26) an den ersten und zweiten sich der Länge nach erstreckenden Kanten (30, 32) auf der ersten Seite aneinander zu kleben, wenn das Gewebe (12) gefaltet wird, um Fächer (62) mit zu den Vertiefungen (22) auf der sauberen Seite (18) angrenzenden Öffnungen (65) auszuformen;
**dadurch gekennzeichnet, dass** die Einprägungen (60) in einigen Spalten (C, D) auf der zweiten Seite voneinander beabstandet sind, um Lücken (95, 96) auszuformen, die es verschmutzter Flüssigkeit ermöglichen, zwischen den Einprägungen (60) zu fließen,

11. Filtermedium nach Anspruch 10, wobei die Einprägungen (70) in einigen Spalten (A, B) auf der ersten Seite voneinander beabstandet sind, um Lücken (80, 84) auszuformen, die es sauberer Flüssigkeit ermöglichen, zwischen den Einprägungen (70) zu fließen.

12. Filtermedium nach Anspruch 10 oder Anspruch 11, wobei die Einprägungen (61) in einigen Spalten auf der zweiten Seite durchgängig sind, um Kanäle auszuformen, die so angeordnet sind, dass die Flüssigkeit gelenkt wird, um in einer Richtung quer zu den Faltungslinien (100, 102) zu fließen.

13. Filtermedium nach einem der Ansprüche 10 bis 12, wobei die Einprägungen (71) in einigen Spalten auf der ersten Seite durchgängig sind, um Kanäle auszuformen, die so angeordnet sind, dass die Flüssigkeit gelenkt wird, um in einer Richtung quer zu den Faltungslinien (100, 102) zu fließen.

14. Filtermedium nach einem der Ansprüche 10 bis 13, wobei das Filtermediumgewebe (12) aus Zellulose hergestellt ist.

15. Verfahren zum Herstellen eines gefalteten Filtermediums für ein Plattenfilterelement (10), wobei das Verfahren aufweist;
Falten eines Filtermediumgewebes (12) entlang quer verlaufender Faltungslinien (100, 102), wobei das Filtermediumgewebe (12) einander gegenüber liegende erste und zweite Seiten und erste und zweite sich der Länge nach erstreckende Kanten (30, 32) aufweist, das Gewebe (12) durch die quer verlaufenden Faltungslinien (100, 02) in eine Vielzahl von ersten und zweiten Platten (24, 26) unterteilt wird und Bereiche von langgestreckten Einprägungen (60, 70) aufweist, die sowohl von der ersten als auch der zweiten Seite hervorstehen und in Spalten (A, B, C, D) angeordnet sind, die sich zwischen den Faltungslinien (100, 102) erstrecken, wobei das Falten so ausgefÜhrt ist, dass die ersten und zweiten Platten (24, 26) einander sowohl auf der ersten Seite als auch der zweiten Seite gegenüber liegen, um ein gefaltetes Filtermedium mit Erhöhungen (20) und Vertiefungen (22) auszuformen, die erste Seite eine saubere Seite (18) für das Plattenfilterelement (10) ausformt und die zweite Seite eine unsaubere Seite (15) für das Plattenfilterelenient (10) ausformt, wobei die Bereiche der langgestreckten Einprägungen (60, 70) in Spalten (A, B, C, D) angeordnet sind, die sich zwischen den Erhöhungen (20) und Vertiefungen (22) erstrecken und sowohl von der sauberen Seite als auch der unsauberen Seite (18, 15) hervorstehen; und
Verkleben der ersten und zweiten Platten (24, 26) miteinander an den ersten und zweiten sich der Länge nach erstreckenden Kanten (30, 32) auf der ersten Seite, um Fächer (62) mit zu den Vertiefungen (22) auf der sauberen Seite (18) angrenzenden Öffnungen (65) auszuformen;
wobei das Verkleben bewirkt wird durch Haftmittel (103, 104) nahe der ersten und zweiten sich der Länge nach erstreckenden Kanten (30, 32) auf der ersten Seite des Gewebes (12);
**dadurch gekennzeichnet, dass** die Einprägungen (60) in einigen Spalten (C, D) auf der unsauberen Seite (15) voneinander beabstandet sind, um Lücken (95, 96) auszuformen, die es verschmutzter Flüssigkeit ermöglichen, zwischen den Einprägungen (60) zu fließen.

## Revendications

1. Élément à panneau filtrant (10), comprenant :
- un milieu filtrant plissé (12) doté de pics (20) et de vallées (22) ayant un côté propre et sale (18, 15), le milieu filtrant plissé (12) ayant des rangées de bossages allongés (60, 70) disposés en colonnes (A, B, C, D) s'étendant entre les pics (20) et les vallées (22) se projetant depuis les deux côtés propre et sale (18, 15), le milieu filtrant plissé (12) étant en outre disposés avec des ensembles (23) de plis ayant des bords (30, 32) qui sont fermés, pour former le côté propre (18) du milieu filtrant plissé en poches (62) dotées d'ouvertures (65) adjacents aux vallées (22) et
- un joint périphérique (14) autour du milieu filtrant (12) formant une barrière entre les côtés propre et sale (18, 15),
moyennant quoi le milieu filtrant plissé (12) est disposé de sorte que le fluide sale puisse entrer dans le milieu filtrant plissé (12) dans une direction transversale aux pics (20) du milieu filtrant plissé (12) et latéralement entre les ensembles (23) de plis fermés, et de façon à émerger dans les poches (62) sous forme de fluide propre pour le passage en dehors des ouvertures (65) adjacentes aux vallées (22),
**caractérisé en ce que** les bossages (60) dans certaines colonnes (C, D) sur le côté sale (15) sont espacés pour former des intervalles (95, 96) qui permettent au fluide sale de s'écouler entre les bossages (60).

2. Élément à panneau filtrant (10) selon la revendication 1, dans lequel les bossages (70) dans certaines colonnes (A, B) sur le côté propre (18) sont espacés pour former des intervalles (72, 80, 84) qui permettent au fluide propre de s'écouler entre les bossages (70).

3. Élément à panneau filtrant (10) selon la revendication 1 ou la revendication 2, dans lequel les bossages (61) dans certaines colonnes sur le côté sale (15) sont continus pour former des canaux disposés, de sorte que ledit fluide soit dirigé de façon à s'écouler dans une direction transversale aux pics (20) et vallées (22).

4. Élément à panneau filtrant (10) selon l'une quelconque des revendications précédentes, dans lequel les bossages (71) dans certaines colonnes sur le côté propre (18) sont continues pour former des canaux dans les poches (62).

5. Élément à panneau filtrant (10) selon l'une quelconque des revendications précédentes, dans lequel des paires de bossages (70) sur le côté propre (18) viennent en butée l'une avec l'autre dans les poches (62).

6. Élément à panneau filtrant (10) selon l'une quelconque des revendications précédentes, dans lequel les vallées (22) comprennent des planchers de vallées plats (56) pour maintenir les bords (30, 32) des ensembles (23) espacés les uns des autres.

7. Élément à panneau filtrant (10) selon la revendication 6, dans lequel le joint (14) est moulé autour du milieu filtrant plissé (12) et met en prise les planchers de vallées plats (56) afin de renforcer une partie de base du milieu filtrant plissé (12) formé par les vallées (22).

8. Élément à panneau filtrant (10) selon l'une quelconque des revendications précédentes, dans lequel les vallées (22) se trouvent dans un plan qui définit une face latérale propre (36) du milieu filtrant plissé (12) et l'élément filtrant (10) comprend un écran (16) sur la face latérale propre (36).

9. Élément à panneau filtrante (10) selon l'une quelconque des revendications précédentes, dans lequel le milieu filtrant plissé (12) est réalisé à partir de cellulose.

10. Milieu filtrant pour un élément à panneau filtrant (10), le milieu filtrant comprenant :
- une toile de milieu filtrant (12) ayant des premier et second côtés opposés et un premier et un second bords s'étendant longitudinalement (30, 32), la toile (12) étant divisée par des lignes de pliure transversales (100, 102) en une pluralité de premier et second panneaux (24, 26) et ayant des rangées de bossages allongés (60, 70) se projetant depuis le premier et le second côtés disposés en colonnes (A, B, C, D) s'étendant entre les lignes de pliure (100, 102), et
- un adhésif (103, 104) proche du premier et du second bords s'étendant longitudinalement (30, 32) sur le premier côté de la toile (12) ;
dans lequel la toile (12) est pliable le long des lignes de pliure (100, 102), de sorte que lesdits premier et second panneaux (24, 26) soient l'un en face de l'autre sur le premier et le second côtés, afin de former un milieu filtrant plissé avec des pics (20) et des vallées (22), le premier côté formant un côté propre (18) pour l'élément à panneau filtrant (10) et le second côté formant un côté sale (15) pour l'élément à panneau filtrant (10), les rangées de bossages allongés (60,70) disposées dans les colonnes (A, B, C, D) s'étendant entre les pics (20) et les vallées (22) et se projetant depuis les côtés propre et sale (18, 15) ; et
dans lequel l'adhésif (103, 104) est disposé de façon à faire adhérer les premier et second panneaux (24, 26) l'un à l'autre au niveau du premier et du second bords s'étendant longitudinalement (30, 32) sur le premier côté quand la toile (12) est pliée de façon à former des poches (62) avec des ouvertures (65) adjacentes aux vallées (22) sur le côté propre (18) ;
**caractérisé en ce que** les bossages (60) dans certaines colonnes (C, D) sur le second côté sont espacés, de façon à former des intervalles (95, 96) qui permettent au fluide sale de s'écouler entre les bossages (60).

11. Milieu filtrant selon la revendication 10, dans lequel les bossages (70) dans certaines colonnes (A, B) sur le premier côté sont espacés, de façon à former des intervalles (80, 84) qui permettent au fluide propre de s'écouler entre les bossages (70).

12. Milieu filtrant selon la revendication 10 ou 11, dans lequel les bossages (61) dans certaines colonnes sur le second côté sont continus, pour former des canaux disposés de sorte que ledit fluide soit dirigé de façon à s'écouler dans une direction transversale aux lignes de pliure (100, 102).

13. Milieu filtrant selon l'une quelconque des revendications 10 à 12, dans lequel les bossages (71) dans certaines colonnes sur le premier côté sont continus pour former des canaux disposés, de sorte que ledit fluide soit dirigé de façon à s'écouler dans une direction transversale aux lignes de pliure (100, 102).

14. Milieu filtrant selon l'une quelconque des revendications 10 à 13, dans lequel la toile de milieu filtrant (12) est réalisée en cellulose.

15. Procédé de réalisation d'un milieu filtrant plissé pour un élément à panneau filtrant (10), le procédé comprenant :
- la pliure d'une toile de milieu filtrant (12) le long de lignes de pliure transversales (100, 102),
- la toile de milieu filtrant (12) ayant des premier et second côtés opposés et un premier et un second bords s'étendant longitudinalement (30, 32), la toile (12) étant divisée par les lignes de pliure transversales (100, 102) dans une pluralité de premier et second panneaux (24, 26) et ayant des rangées de bossages allongés (60, 70) se projetant depuis le premier et le second côtés disposés dans des colonnes (A, B, C, D) s'étendant entre les lignes de pliure (100, 102), la pliure étant telle que le premier et le second panneaux (24, 26) soient mis l'un face à l'autre sur le premier et le second côtés, afin de former un milieu filtrant plissé avec des pics (20) et des vallées (22), le premier côté formant un côté propre (18) pour l'élément à panneau filtrant (10) et le second côté formant un côté sale (15) pour l'élément à panneau filtrant (10), les rangées des bossages allongés (60, 70) étant disposées dans des colonnes (A, B, C, D) s'étendant entre les pics (20) et les vallées (22) et se projetant depuis les côtés propre et sale (18, 15) et
- l'adhésion du premier et du second panneaux (24, 26) l'un à l'autre au niveau du premier et du second bords s'étendant longitudinalement (30, 32) sur le premier côté, afin de former des poches (62) avec des ouvertures (65) adjacentes aux vallées (22) sur le côté propre (18) ;
dans lequel l'adhésion est réalisée par un adhésif (103, 104) proche du premier et du second bords s'étendant longitudinalement (30, 32) sur le premier côté de la toile (12) ;
**caractérisé en ce que** les bossages (60) dans certaines colonnes (C, D) sur le côté sale (15) sont espacés pour former des intervalles (95, 96) qui permettent au fluide sale de s'écouler entre les bossages (60).
